Europäisches Patentamt

European Patent Office

Office européen des brevets

(19)

(11) Veröffentlichungsnummer: **0 025 429**

**A1**

(12) # EUROPÄISCHE PATENTANMELDUNG

(21) Anmeldenummer: **80890099.7**

(22) Anmeldetag: **05.09.80**

(51) Int. Cl.³: **G 05 D 13/14**

(30) Priorität: **06.09.79 AT 5899/79**

(43) Veröffentlichungstag der Anmeldung:
**18.03.81 Patentblatt 81/11**

(84) Benannte Vertragsstaaten:
**AT DE FR GB IT NL**

(71) Anmelder: **AVL GESELLSCHAFT FÜR
VERBRENNUNGSKRAFTMASCHINEN UND
MESSTECHNIK MBH.PROF.DR.DR.H.C.HANS LIST
Kleiststrasse 48
A-8020 Graz(AT)**

(71) Anmelder: **Friedmann & Maier Aktiengesellschaft
Friedmannstrasse 7
A-5400 Hallein bei Salzburg(AT)**

(72) Erfinder: **Noraberg, John
Wartingergasse 17
A-8010 Graz(AT)**

(72) Erfinder: **Herzog, Peter
Sikorastrasse 10
A-5400 Hallein(AT)**

(74) Vertreter: **Krause, Walter, Dr. Dipl.-Ing.
Margaretenstrasse 21
A-1040 Wien(AT)**

(54) **Fliehkraftregler.**

(57) Bei einem Fliehkraftregler mit Fliehgewichten, welche entgegen der Kraft von mindestens einer Feder bei steigender Drehzahl über an quer zur Achse der Antriebswelle an einem Mitnehmer angeordneten Achsen schwenkbar gelagerte Winkelhebel eine axiale Bewegung einer Reglerstange bewirken, wobei jedes Fliehgewicht aus zwei Teilen besteht, wovon der erste ab einer bestimmten Drehzahl der Antriebswelle an einem Anschlag anliegt, wogegen der zweite Teil frei weiterbewegbar ist, ist um die Konstruktion zu vereinfachen und unnötige Reibungsverluste sowie Ausgleichsmassen für die Winkelhebel zu vermeiden, vorgesehen, daß jeder Teil (9, 10, 29, 30) der Fliehgewichte unmittelbar als Winkelhebel ausgebildet und am Mitnehmer (12, 27) schwenkbar gelagert ist und daß der Anschlag (23, 45) für den ersten Teil (10, 30) jedes Fliehgewichtes die Schwenkbewegung dieses Teiles ab einem bestimmten Schwenkwinkel verhindert.

Durch diese Ausbildung übertragen die einzelenen Teile jedes Fliehgewichts ihre drehzahlabhängige Bewegung unmittelbar auf die zu betätigende Regelstange, womit der Aufbau des Reglers insgesamt vereinfacht wird und die Reibungsverluste im Regler auf ein Minimum reduziert werden.

FIG.1

- 1 -

## Fliehkraftregler

Die Erfindung betrifft einen Fliehkraftregler mit Fliehgewichten, welche entgegen der Kraft von mindestens einer
Feder bei steigender Drehzahl über an quer zur Achse der
Antriebswelle an einem Mitnehmer angeordneten Achsen
schwenkbar gelagerte Winkelhebel eine axiale Bewegung einer
Reglerstange bewirken, wobei jedes Fliehgewicht aus zwei
Teilen besteht, wovon der erste ab einer bestimmten Drehzahl der Antriebswelle an einem Anschlag anliegt, wogegen
der zweite Teil frei weiterbewegbar ist.

Bei bekannten Fliehkraftreglern üblicher Bauart besteht
das Problem, daß entweder bei niedrigen Drehzahlen ein zu
kleines Arbeitsvermögen vorhanden ist, oder bei hohem
Arbeitsvermögen und bei hohen Drehzahlen der Raum für den
Einbau von mehreren Reglerfedern - die die Gleichgewichtskraft zu der Fliehkraft der Fliehgewichte liefern - fehlt.

Um diese Nachteile zu vermeiden, ist beispielsweise aus
der CH-PS 162.241 ein Fliehkraftregler der eingangs genannten Art bekannt, bei dem die aus Gründen eines an einen
weiten Drehzhalbereich angepaßten Arbeitsvermögens zweiteilig ausgebildeten Fliehgewichte vorgesehen sind, die
senkrecht zur Antriebsachse des Reglers geführt und über
ebenfalls senkrecht zur Antriebsachse wirkende Rückstellfedern belastet sind. Bei ansteigenden Drehzahlen bewegen
sich vorerst die beiden Fliehgewichtsteile gemeinsam gegen
die Kraft der Rückstellfeder nach außen, wobei diese Bewegung über je Fliehgewicht einen Winkelhebel auf einen
somit in Achsrichtung des Reglers bewegten Bolzen übertragen wird, der zur Betätigung eines drehzahlabhängig zu steuernden Organs dient. Ab einer gewissen Drehzahl liegt sodann der innere, schwerere Teil der Fliehgewichte an einem Anschlag an, worauf nur der äußere, leichtere und direkt mit dem Winkelhebel zusammenwirkende Fliehgewichtsteil sich weiterbewegt. Der Anschlag ist dabei als Bund an einem zur Stützung der Rückstellfedern dienenden Bolzen ausgebildet.

Diese Ausführung bietet zwar einen kompakten Regler mit über weite Drehzahlbereiche angepaßtem Arbeitsvermögen und Regelverhalten, hat jedoch den Nachteil, daß wegen erforderlicher zweifacher gelenkiger Übertragung der Fliehkraft - zuerst vom jeweils äußeren Fliehgewichtsteil auf den Winkelhebel und sodann von diesem über den Bolzen auf das zu regelnde Organ - und der damit auftretenden Reibungsverluste Arbeitsvermögen verloren geht und der Aufbau des Reglers kompliziert ist. Damit die Winkelhebel selbst in ihren verschiedenen Stellungen nicht das Regelverhalten beeinflussen, sind weiters zusätzliche Ausgleichsmassen an Armen der Hebel vorgesehen, welche das Gewicht des Reglers in ungünstiger Weise erhöhen.

Aufgabe der Erfindung ist es, einen Regler der eingangs genannten Art so zu verbessern, daß die erwähnten Nachteile des bekannten Reglers vermieden werden. Die Erfindung löst diese Aufgabe dadurch, daß jeder Teil der Fliehgewichte unmittelbar als Winkelhebel ausgebildet und am Mitnehmer schwenkbar gelagert ist und daß der Anschlag für den ersten Teil jedes Fliehgewichts die Schwenkbewegung dieses Teiles ab einem bestimmten Schwenkwinkel verhindert. Durch diese Ausbildung übertragen die einzelnen Teile jedes Fliehgewichts ihre drehzahlabhängige Bewegung unmittelbar auf die zu betätigende Regelstange, womit der Aufbau des Reglers insgesamt vereinfacht wird und die Reibungsverluste im Regler auf ein Minimum reduziert werden. Da die Teile der Fliehgewichte direkt zur Übertragung ihrer Bewegung ausgebildet sind, werden auch zusätzliche Massen zum Ausgleich der bei verschiedenen Drehzahlen sich verschieden auswirkenden Massen der Winkelhebel der bekannten Einrichtung überflüssig, was den Fliehkraftregler auch kompakter und leichter macht.

Die Zweiteilung der Fliehgewichte ist zwar technisch am sinnvollsten, jedoch ist auch jede weitere Teilung des Fliehgewichtes denkbar.

Die Fliehgewichtsunterteilung kann weiters für jede beliebige Reglerbauart, wie Quer-, Zentral- und Schwenkfederregler verwendet werden, sowie für jede beliebige Fliehgewichts-Federkombination.

In weiterer Ausgestaltung der Erfindung ist vorgesehen, daß die Antriebswelle an einem Ende eine zentrale Ausnehmung für den Eingriff der mit der Reglerstange verbundenen Welle aufweist und den Mitnehmer trägt, auf welchem die Achse für die beiden Fliehgewichtsteile angeordnet ist, daß der erste Fliehgewichtsteil zwei etwa parallel zur Antriebswelle ausgerichtete Arme und einen Steg zwischen diesen sowie zur Antriebswelle gerichtete Arme aufweist, deren Enden an einem Querbolzen der mit der Reglerstange verbundenen Welle anliegen, daß der zweite Fliehgewichtsteil zwei etwa parallel zur Antriebswelle ausgerichtete Arme und einen Steg zwischen diesen sowie zur Antriebswelle gerichtete, an dem Querbolzen der mit der Reglerstange verbundenen Welle anliegende Arme aufweist, wobei der Steg des zweiten Fliehgewichtsteiles die Arme des ersten Fliehgewichtsteils brückenartig überragt und daß die zur Antriebswelle gerichteten Arme beider Fliehgewichtsteile mit Vorsprüngen an einem Teller einer zentralen, auf der Antriebswelle sitzenden Feder anliegen, deren anderer Teller an einem Absatz der Antriebswelle abgestützt ist. Damit ist eine praktische Ausführungsform der Erfindung mit verhältnismäßig geringem Aufwand für einen Zentralfeder-Fliehkraftregler geschaffen.

Erfindungsgemäß ist es auch möglich, daß der erste Fliehgewichtsteil eine Kante aufweist, die nach einem bestimmten Schwenkwinkel am Anschlag des Mitnehmers anliegt.

Eine Weiterbildung der Erfindung ist ferner dadurch gekennzeichnet, daß die am Querbolzen anliegenden Enden
der Arme des zweiten Fliehgewichtsteiles den Querbolzen
mit Schlitzen umfassen. Dabei ist es vorteilhaft, wenn von
den Enden der Arme des ersten Fliehgewichtsteiles Bolzen
abstehen, die von Schlitzen an den Enden der Arme des entsprechenden symmetrisch gegenüberliegenden Fliehgewichtsteiles umgriffen sind. Diese Koppelung bewirkt, daß ein
Fliehgewichtsteil vom Querbolzen bei niedrigen Drehzahlen
nicht abhebt.

Weiters ist gemäß der Erfindung auch vorgesehen, daß der
andere Teller der Feder unter Zwischenschaltung von Beilagscheiben an einem Absatz der Antriebswelle anliegt.
Damit ist eine gewünschte Vorspannungsänderung an der
Feder leicht vorzunehmen.

Erfindungsgemäß ist es weiters möglich, eine Ausführungsform für eine Querfederanordnung so auszubilden, daß
auf der Antriebswelle ein hammerkopf-förmiger Mitnehmer
mit einer zentralen Ausnehmung für den Eingriff der mit
der Reglerstange zusammenarbeitenden Welle befestigt ist,
der die Achse für die beiden abgewinkelten Fliehgewichtsteile trägt, daß die parallel zur Antriebswelle ausgerichteten Arme des zweiten Fliehgewichtsteiles mit einem Querzapfen einen Teller für eine im rechten Winkel zur Antriebswelle ausgerichtete Feder tragen, deren anderer Teller
auf einem vom Mitnehmer abstehenden, die Feder durchsetzenden Bolzen mittels Schraubenmutter befestigt ist, daß
die parallel zur Antriebswelle ausgerichteten Arme des
ersten Fliehgewichtsteiles an ihrer Oberseite nach oben
offene Ausnehmungen für den Querzapfen des zweiten Fliehgewichtsteiles und eine abgeschrägte Kante aufweisen, mit
welcher der erste Fliehgewichtsteil nach einer durch die
Ausbildung der Teile definierten Verschwenkung an dem Anschlag des Mitnehmers anliegt und daß die zur Antriebswelle ausgerichteten Arme beider Fliehgewichtsteile an einem Querbolzen der mit der Reglerstange zusammenarbeitenden Welle mit einer Kante anliegen bzw. mit einem Schlitz den Querbolzen umgreifen.

Die Erfindung ist in der Zeichnung anhand einiger Ausführungsbeispiele näher veranschaulicht. Es zeigen

Figuren 1 bis 5 einen erfindungsgemäßen Fliehkraftregler mit Zentralfeder in Seitenansicht und im Schnitt sowie einige Details dazu,

Figuren 6 bis 10 einen erfindungsgemäßen Fliehkraftregler mit Querfedern in Stirnansicht, Seitenansicht, Schnitt und schaubildlich in einigen Details.

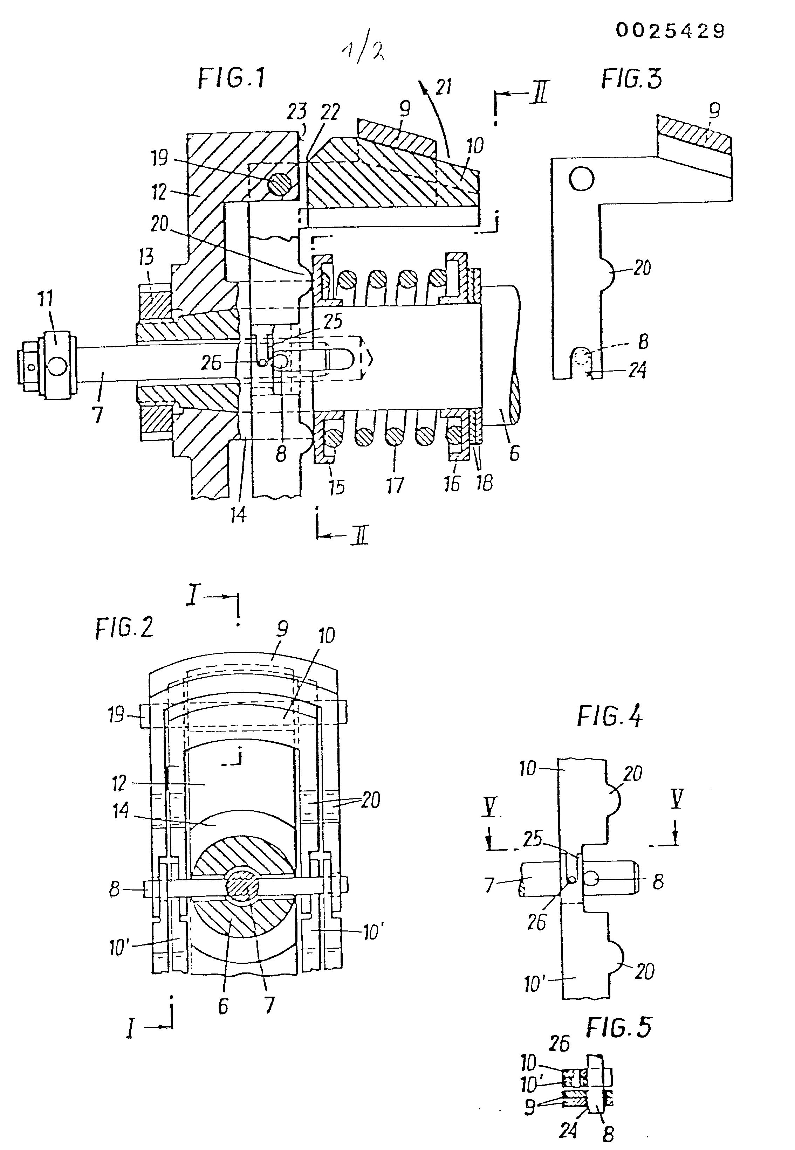

Gemäß den Figuren 1 bis 5 ist in der Antriebswelle 6 (z. B. Nockenwelle) eine Welle 7 axial verschiebbar gelagert, die über einen Querbolzen 8 mit den etwa winkelförmigen Fliehgewichtsteilen 9 und 10 in Verbindung steht. Auf der Welle 7 befindet sich ein Mitnehmer 11, an dem ein hier nicht dargestellter Reglerhebel angreift. Auf der Antriebswelle 6 ist ein Mitnehmer 12 durch eine Schraubenmutter 13 befestigt. Am Fortsatz 14 des Mitnehmers 12 stützt sich ein Federteller 15 ab. Zwischen diesem Federteller 15 und einem weiteren Federteller 16 liegt die Reglerfeder 17, deren Vorspannung über die Beilagscheiben 18 eingestellt wird, die sich an einem Absatz der Antriebswelle 6 abstützen. Im Mitnehmer 12 sind Achsen 19 angebracht, auf denen die Fliehgewichtsteile 9 und 10 schwenkbar gelagert sind. Beide Fliehgewichtsteile 9 und 10 wirken jeweils über einen Daumen 20 auf den Federteller 15. Gleichzeitig sind sie auch über den Querbolzen 8 mit der Welle 7 in Verbindung. Mit steigender Drehzahl bewegen sich die Fliehgewichtsteile 9 und 10 entgegen der Kraft der Feder 17 gemäß dem Pfeil 21 nach außen und ziehen damit die Welle 7 über den Querbolzen 8 in Figur 1 nach rechts.

Dies geschieht so lange, bis der erste Fliehgewichtsteil 10 mit seiner Kante 22 auf einer Kante 23 des Mitnehmers 12 aufliegt. Ab dieser Drehzahl ist der Fliehgewichtsteil 10 praktisch außer Wirkung.

Steigt die Drehzahl weiter an, so wirkt nur mehr der Fliehgewichtsteil 9 über den Federteller 15 zur Erhöhung der Kraft auf die Feder 17. Der Querbolzen 8 wird dann nur mehr durch den Schlitz 24 des Fliehgewichtsteiles 9 gemäß Figur 3 geführt, da er von der Nase 25 des Fliehgewichtsteiles 10 abhebt.

Der Fliehgewichtsteil 10 ist dabei über einen Bolzen 26 mit dem symmetrisch gegenüberliegenden Fliehgewichtsteil 10' gemäß Figuren 4 und 5 gekoppelt. Diese Koppelung ist notwendig, damit bei niedrigen Drehzahlen der Fliehgewichtsteil 10 durch Einwirkung der Schwerkraft nicht von dem Querbolzen 8 abhebt.

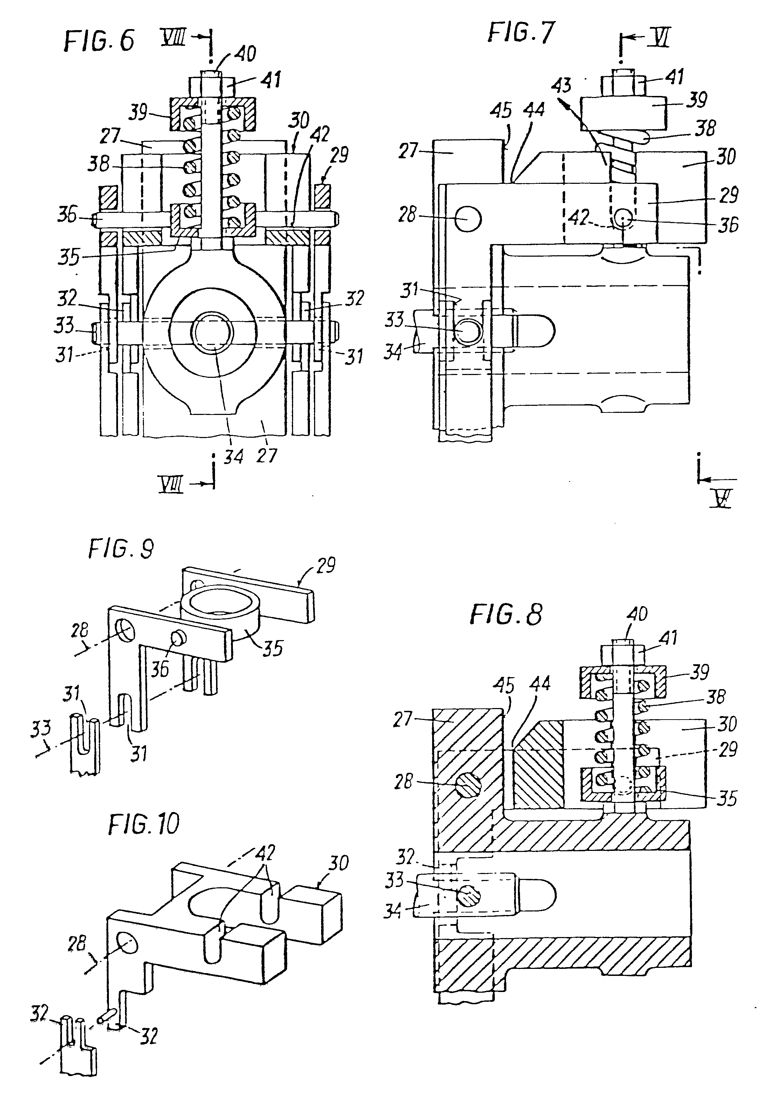

Bei einem Querfeder-Fliehkraftregler gemäß den Figuren 6 bis 10 sind im hammerkopf-förmigen Mitnehmer 27 über die Achse 28 die Fliehgewichtsteile 29 und 30 schwenkbar gelagert. Über Schlitze 31 und Nasen 32 wird der Querbolzen 33 und damit die Welle 34 axial bewegt. Zwischen den beiden Armen des zweiten Fliehgewichtsteiles 29 ist ein unterer Federteller 35 durch einen Querbolzen 36 gehalten. Im Federteller 35 stützt sich die Feder 38 gegen den oberen Federteller 39 ab. Die Vorspannung der Feder 38 wird über die oben an einem Bolzen 40 angreifende Mutter 41 eingestellt, wobei der Bolzen 40 mit dem Mitnehmer 27 verbunden ist und mitrotiert.

Der Querbolzen 36, mit dem der Federteller 35 im zweiten Fliehgewichtsteil 29 abgestützt ist, liegt im ersten Fliehgewichtsteil 30 in Schlitzen 42 auf. Mit steigender Drehzahl bewegen sich die beiden Fliehgewichtsteile 29 und 30 entgegen der Kraft der Feder 38 nach außen gemäß dem Pfeil 43. Wird jene Drehzahl erreicht, bei der die Kante 44 des ersten Fliehgewichtsteiles 30 auf der Kante 45 des Mitnehmers 27 aufliegt, so wird der erste Fliehgewichtsteil 30 außer Wirkung gesetzt. Mit weiter steigender Drehzahl kann sich daher nur mehr der zweite Fliehgewichtsteil 29 weiter verschwenken. Der Querbolzen 36 kommt dabei außer Eingriff mit dem ersten Fliehgewichtsteil 30, da die Schlitze 42 nach oben offen sind. Der Querbolzen 33 hebt von der Nase 32 des ersten Fliehgewichtsteiles 30 ab und wird nur mehr vom Schlitz 31 des zweiten Fliehgewichtsteiles 29 geführt. Die Koppelung der schweren Fliehgewichtsteile ist in den schaubildlichen Darstellungen der Figuren 9 und 10 veranschaulicht. Die Funktionsweise des dargestellen Querfederreglers ist die gleiche wie für den vorhin beschriebenen Zentralfederregler.

Für die angeführten Ausführungsbeispiele ist der Einfachheit halber nur eine Feder dargestellt. Es ist jedoch jede beliebige Fliehgewichtsfederkombination möglich, und es ist die Erfindung weiters auch nicht auf die in den Figuren 1 bis 10 dargestellten Ausführungsbeispiele beschränkt.

Bei den erwähnten Zentral- und Querfederfliehkraftreglern wirken vorzugsweise acht Fliehgewichtsarme auf die Welle 7 gemäß Figur 1 oder die Welle 34 gemäß Figur 8 ein, welche Wellen den nicht dargestellten Reglerhebel verstellen.

Patentansprüche:

1. Fliehkraftregler mit Fliehgewichten, welche entgegen der Kraft von mindestens einer Feder bei steigender Drehzahl über an quer zur Achse der Antriebswelle an einem Mitnehmer angeordneten Achsen schwenkbar gelagerte Winkelhebel eine axiale Bewegung einer Reglerstange bewirken, wobei jedes Fliehgewicht aus zwei Teilen besteht, wovon der erste ab einer bestimmten Drehzahl der Antriebswelle an einem Anschlag anliegt, wogegen der zweite Teil frei weiterbewegbar ist, d a d u r c h   g e k e n n z e i c h n e t ,  daß jeder Teil (9, 10, 29, 30) der Fliehgewichte unmittelbar als Winkelhebel ausgebildet und am Mitnehmer (12, 27) schwenkbar gelagert ist und daß der Anschlag (23, 45) für den ersten Teil (10, 30) jedes Fliehgewichtes die Schwenkbewegung dieses Teiles ab einem bestimmten Schwenkwinkel verhindert.

2. Fliehkraftregler nach Anspruch 1, dadurch gekennzeichnet, daß die Antriebswelle (6) an einem Ende eine zentrale Ausnehmung für den Eingriff der mit der Reglerstange verbundenen Welle (7) aufweist und den Mitnehmer (12) trägt, auf welchem die Achse (19) für die beiden Fliehgewichtsteile (9, 10) angeordnet ist, daß der erste Fliehgewichtsteil (10) zwei etwa parallel zur Antriebswelle (6) ausgerichtete Arme und einen Steg zwischen diesen sowie zur Antriebswelle gerichtete Arme aufweist, deren Enden an einem Querbolzen (8) der mit der Reglerstange verbundenen Welle (7) anliegen, daß der zweite Fliehgewichtsteil (9) zwei etwa parallel zur Antriebswelle (6) ausgerichtete Arme und einen Steg zwischen diesen sowie zur Antriebswelle gerichtete, an dem Querbolzen (8) der mit der Reglerstange verbundenen Welle (7) anliegende Arme aufweist, wobei der Steg des zweiten Fliehgewichtsteiles (9) die Arme des ersten Fliehgewichtsteiles (10) brückenartig überragt und daß die zur Antriebswelle (6) gerichteten Arme beider Fliehgewichtsteile (9, 10) mit Vorsprüngen (20) an einem Teller (15) einer zentralen, auf der Antriebswelle (6) sitzenden Feder (17) anliegen, deren anderer Teller (16) an einem Absatz der Antriebswelle (6) abgestützt ist.

3. Fliehkraftregler nach Anspruch 2, dadurch gekennzeichnet, daß der erste Fliehgewichtsteil (10) eine Kante (22) aufweist, die nach einem bestimmten Schwenkwinkel am Anschlag (23) des Mitnehmers (12) anliegt (Figur 1).

4. Fliehkraftregler nach einem der Ansprüche 2 oder 3, dadurch gekennzeichnet, daß die am Querbolzen (8) anliegenden Enden der Arme des zweiten Fliehgewichtsteiles (9) den Querbolzen (8) mit Schlitzen (24) umfassen.

5. Fliehkraftregler nach einem der Ansprüche 2 bis 4, dadurch gekennzeichnet, daß von den Enden (25) der Arme des ersten Fliehgewichtsteiles (10) Bolzen (26) abstehen, die von Schlitzen an den Enden der Arme des entsprechenden symmetrisch gegenüberliegenden Fliehgewichtsteiles (10') umgriffen sind.

6. Fliehkraftregler nach einem der Ansprüche 2 bis 5, dadurch gekennzeichnet, daß der andere Teller (16) der Feder (17) unter Zwischenschaltung von Beilagscheiben (18) an einem Absatz der Antriebswelle (6) anliegt.

7. Fliehkraftregler nach Anspruch 1, dadurch gekennzeichnet, daß auf der Antriebswelle ein hammerkopf-förmiger Mitnehmer (27) mit einer zentralen Ausnehmung für den Eingriff der mit der Reglerstange zusammenarbeitenden Welle (34) befestigt ist, der die Achse (28) für die beiden abgewinkelten Fliehgewichtsteile (29, 30) trägt, daß die parallel zur Antriebswelle ausgerichteten Arme des zweiten Fliehgewichtsteiles (29) mit einem Querzapfen (36) einen Teller (35) für eine im rechten Winkel zur Antriebswelle ausgerichtete Feder (38) tragen, deren anderer Teller (39) auf einem vom Mitnehmer (27) abstehenden, die Feder (38) durchsetzenden Bolzen (40) mittels Schraubenmutter (41) befestigt ist, daß die parallel zur Antriebswelle ausgerichteten Arme des zweiten Fliehgewichtsteiles (30) an ihrer Oberseite nach oben offene Ausnehmungen (42) für den Querzapfen (36) des zweiten Fliehgewichtsteiles (29) und eine abgeschrägte Kante (44) aufweisen, mit welcher der erste Fliehgewichtsteil (30) nach einer durch die Ausbildung der Teile definierten Verschwenkung an dem Anschlag (45) des Mitnehmers (27) anliegt und daß die zur Antriebswelle ausgerichteten Arme beider Fliehgewichtsteile (29, 30) an einem Querbolzen (33) der mit der Reglerstange zusammenarbeitenden Welle (34) mit einer Kante (32) anliegen bzw. mit einem Schlitz (31) den Querbolzen (33) umgreifen.

0025429

1/2

FIG.1

FIG.3

FIG.2

FIG.4

FIG.5

FIG.6

FIG.7

FIG.9

FIG.8

FIG.10

**0025429**

Nummer der Anmeldung

EP 80 89 0099

Europäisches Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 2 256 715 (KIRSCHNER)<br>* Seite 2, rechte Spalte, Zeilen 27-30, 61-71; Seite 3, linke Spalte, Zeilen 4-75; rechte Spalte, Zeilen 1-9 Figuren 1, 5,8 *<br>-- | 1-4 | G 05 D 13/14 |
| | FR - A - 2 348 367 (BOSCH)<br>* Seite 5, Zeilen 1-8; Figur 1 *<br>-- | 1,2,4, 5,7 | |
| | US - A - 2 312 212 (EDWARDS)<br>* Seite 1, rechte Spalte, Zeilen 20-55; Seite 2, linke Spalte, Zeilen 1,2; Figur 3 *<br>-- | 1,2,6 | **RECHERCHIERTE SACHGEBIETE (Int. Cl.³)**<br><br>G 05 D 13/14<br>13/12<br>13/10<br>13/18<br>13/20<br>F 02 D 1/04 |
| | FR - A - 1 307 228 (HEINZMANN)<br>* Seite 1, linke Spalte, Absatz 9 bis rechte Spalte, Absatz 3 *<br>-- | 1,2,7 | |
| | US - A - 2 646 978 (BARNES)<br>* Spalte 2, Zeilen 1-8; Figur 1 *<br>---- | 1,2 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 21-11-1980 | TIELEMANS |

EPA form 1503.1 06.78